# FASCICULE DE BREVET EUROPEEN

(11) **EP 0 769 446 B1**
(45) Date de publication et mention de la délivrance du brevet: **10.01.2001**
(21) Numéro de dépôt: 96402224.8
(22) Date de dépôt: 18.10.1996
(51) Int. Cl.: B62D 43/10

(54) **Dispositif d'immobilisation d'une roue de véhicule automobile dans un logement**
Vorrichtung zum Fixieren eines Ersatzrads in seinem Behälter in einem Kraftfahrzeug
Device for fixing a spare tyre in its receptacle in an automobile

(30) Priorité: 20.10.1995 FR 9512341
(43) Date de publication de la demande: 23.04.1997
(73) Titulaire: RENAULT, 92109 Boulogne-Billancourt (FR)
(72) Inventeur: Burloude, Jean-Jacques, 78140 Velizy (FR); Esnault, Jean-Claude, 78830 Bullion (FR)
(74) Mandataire: Ernst-Schonberg, Michel

(56) Documents cités:
- EP-A- 0 463 751
- EP-A- 0 764 789
- DE-A- 4 037 255
- GB-A- 2 014 683
- US-A- 4 378 187

## Description

L'invention concerne un dispositif d'immobilisation d'une roue de véhicule automobile dans un logement délimité par une paroi de fond et par une paroi latérale, dans lequel un moyen de fixation assure l'immobilisation de la roue.

La publication FR-A-2693422 décrit un dispositif d'immobilisation au moyen d'un système vis-écrou dans lequel une tige filetée est solidaire de la paroi de fond du logement et dans lequel l'écrou est en appui sur le voile de la roue préalablement centrée sur la dite tige.

Il en résulte que le serrage ou le desserrage de l'écrou est plus ou moins long en fonction de la largeur de la roue utilisée et que la manutention de la roue est plus ou moins aisée en fonction de la longueur de la tige filetée et de la force physique de l'opérateur.

La publication EP-A-0764789 décrit un dispositif d'immobilisation d'une roue de véhicule automobile dans un logement comportant une paroi de fond et dans lequel l'immobilisation de la roue est assurée par l'intermédiaire d'un élément d'appui comprenant un corps qui se prolonge axialement perpendiculairement à une surface d'appui de l'élément d'appui, et dans lequel un organe de manoeuvre assure la déformation du corps, lorsque la surface d'appui est en contact avec la roue, pour coopérer avec un organe de retenue porté par la paroi de fond, et où la déformation du corps est assurée par l'intermédiaire d'un déplacement de l'organe de manoeuvre en coopération avec une rampe réalisée à l'extérieur du corps. Cette publication ayant été publiée le 26.03.1997 en revendiquant une priorité du 21.09.1995, elle est à considérer comme faisant partie de l'état de la technique au sens de l'article 54(3) de la CBE.

L'invention a pour objet un dispositif d'immobilisation perfectionné qui augmente notablement la rapidité de la manutention nécessaire à l'extraction ou à la mise en place de la roue dans son logement.

L'invention a encore pour objet un dispositif d'immobilisation et de desserrage rapide de la roue qui permet une réduction notable de l'effort nécessaire à la manipulation de la roue.

L'invention est conforme aux caractéristiques de la revendication 1.

Le dispositif ainsi réalisé possède l'avantage de faciliter la manutention et d'immobiliser rapidement la roue du véhicule dans son logement.

Le dispositif est utilisé plus particulièrement pour immobiliser une roue de rechange dans le logement correspondant au contact de la surface de chargement du compartiment à bagages du véhicule.

D'autres caractéristiques et avantages de l'invention apparaîtront à la lecture d'un exemple de réalisation du dispositif en référence au dessin annexé dans lequel :
- la figure 1 est une vue en coupe médiane du logement d'une roue de secours et de son dispositif de retenue,
- la figure 2 est une vue à une plus grande échelle du dispositif de retenue isolé représenté à la figure 1,
- la figure 3 est une représentation du dispositif isolé en position de desserrage de la roue.

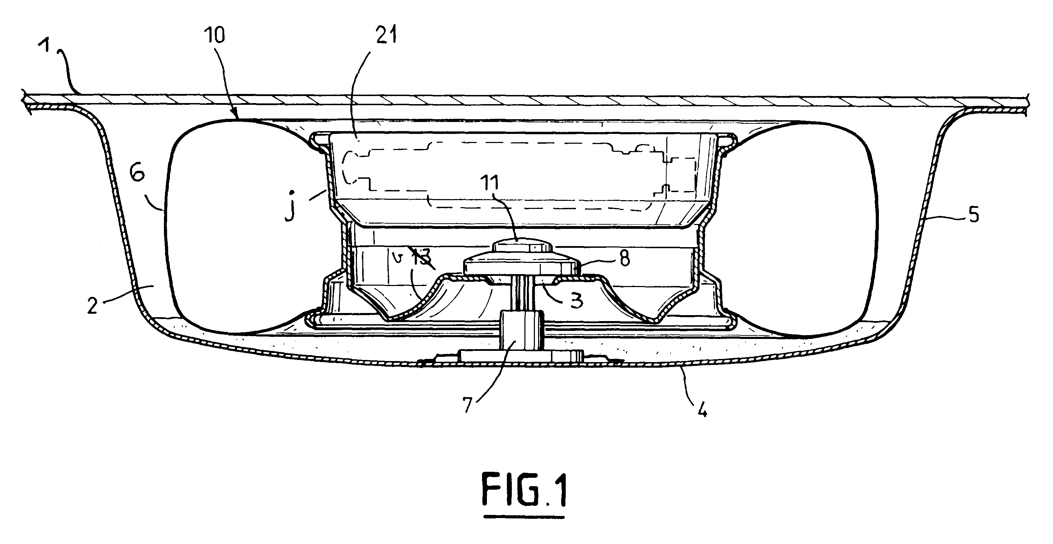

Ainsi que cela est montré à la figure 1, une carrosserie de véhicule automobile possède un panneau de plancher 1 sensiblement horizontal. Un logement 2 de la roue de secours 10 est formé par emboutissage dans le panneau 1 et possède une paroi de fond 4 et une paroi latérale 5.

Sur la paroi de fond 4 est rapporté un disque de maintien de l'organe de retenue 7 qui s'étend verticalement suivant l'axe de la roue 10. La roue 10 est définie par son pneumatique 6 au contact d'un tapis isolant porté par la paroi 4, par sa jante j et par son voile v muni d'un perçage de centrage 3 dont le bord extérieur constitue la surface de contact de l'élément d'appui 8 nécessaire à la rétention de la roue 10 dans le logement 2.

Une clé de manoeuvre 11 assure la déformation partielle d'un corps 13, solidaire de l'élément d'appui 8, orienté sensiblement axialement et perpendiculairement à une surface d'appui 12. Cette déformation du corps 13 est réalisée lorsque la surface d'appui 12 est en contact avec la roue 10.

Le corps 13 possède un certain nombre de doigts flexibles 14 dont la configuration particulière assure leur accrochage au contact de l'organe de retenue 7 sous l'action de la clé de manoeuvre 11.

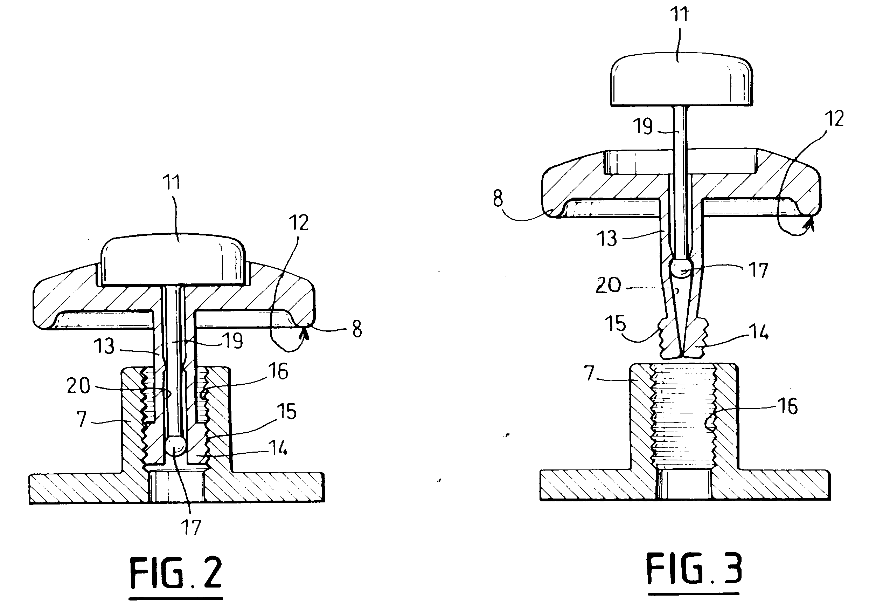

Selon l'exemple de réalisation de l'invention chaque doigt d'accrochage 14 possède une denture 15. La denture 15 est maintenue au contact d'une denture correspondante intérieure 16 de l'organe de retenue 7 sous l'action d'une poussée radiale communiquée par une tête de commande 17 localisée à l'extrémité d'une queue 19 portée par la clé 11. A cet effet chaque doigt d'accrochage tel que 14 porte une rampe d'actionnement 20 au contact de la tête 17. La caractéristique constructive précitée permet à la clé 11 d'opérer :
- un effort radial de poussée sur l'ensemble des doigts d'accrochage 14 dans le sens d'une immobilisation axiale de l'élément d'appui 8 au contact de l'organe de retenue 7 au cours de laquelle la roue 10 peut-être bloquée dans son logement (fig. 2),
- un resserrement de l'ensemble des doigts d'accrochage 14 dans le but de permettre un déplacement axial de l'élément d'appui 8 par rapport à l'organe de retenue 7 au cours de la manutention de la roue 10,
- la séparation de l'élément d'appui 8 de l'organe de retenue 7 au moyen de la clé 11 préalablement à la manutention de la roue 10 (fig. 3),
- le vissage de l'élément d'appui 8 au contact de la roue 10 dans le sens d'un serrage de la roue dans l'hypothèse où les dentures homologues 15, 16 sont hélicoïdales.

Le dispositif précité est bien entendu applicable à la plupart des roues de véhicules.

L'organe de retenue 7, l'élément d'appui 8 et la clé 11 peuvent avantageusement être réalisés en un matériau non métallique. Par ailleurs le sens de rangement de la roue 10 permet la constitution d'une cavité de réception du cric et de la clé de démontage de la roue localisés dans un bac 21 au contact de la jante j de la roue.

## Revendications

1. Dispositif d'immobilisation d'une roue (10) de véhicule automobile dans un logement (2) délimité par une paroi de fond (4) et par une paroi latérale (5) et dans lequel l'immobilisation de ladite roue (10) est assurée par l'intermédiaire d'un élément d'appui (8) comprenant un corps (13) qui se prolonge axialement perpendiculairement à une surface d'appui (12), dudit élément d'appui (8), et dans lequel un organe de manoeuvre (11) assure la déformation dudit corps (13), lorsque ladite surface d'appui (12) est en contact avec la roue (10), pour coopérer avec un organe de retenue (7) porté par ladite paroi de fond (4), et où la déformation du corps (13) est assurée par l'intermédiaire d'un déplacement de l'organe de manoeuvre (11) en coopération avec une rampe d'actionnement (20) réalisée à l'intérieur dudit corps (13).

2. Dispositif d'immobilisation selon la revendication 1, caractérisé en ce que le corps (13) possède des doigts flexibles d'accrochage (14) comportant une denture (15) qui coopère avec une denture intérieure (16) de l'organe de retenue (7).

3. Dispositif d'immobilisation selon la revendication 1, caractérisé en ce que l'organe de manoeuvre (11) comporte une queue (19) à l'extrémité de laquelle est réalisée une tête de commande (17) qui communique une poussée radiale à la rampe d'actionnement (20) lors du déplacement dudit organe de manoeuvre (11).

## Patentansprüche

1. Vorrichtung zum Fixieren eines Kraftfahrzeugrades (10) in einer Aussparung (2), die durch eine Bodenwand (4) und eine Seitenwand (5) begrenzt ist, wobei die Fixierung des Rades (10) gewährleistet wird durch ein Stützteil (8), das ein Bauteil (13) aufweist, das sich axial und senkrecht zu einer Stützfläche (12) des Stützteils (8) erstreckt und wobei ein Betätigungsteil (11) die Verformung des Bauteils (13) bewirkt, wenn die Stützfläche (12) sich auf dem Rad (10) abstützt durch Zusammenwirken mit einem Halteteil (7), das von der Bodenwand (4) getragen wird und wobei die Verformung des Bauteils (13) gewährleistet wird durch eine Verschiebung des Betätigungsteils (11), zusammen mit einer Schwenkfläche (20), die auf der Innenseite des Bauteils (13) ausgebildet ist.

2. Vorrichtung zum Fixieren nach Anspruch 1, dadurch gekennzeichnet, dass das Bauteil (13) flexible Verankerungsfinger (14) aufweist, die mit einer Verzahnung (15) versehen sind, die mit einer Innenverzahnung (16) des Halteteils (7) zusammenwirkt.

3. Vorrichtung zum Fixieren nach Anspruch 1, dadurch gekennzeichnet, dass das Betätigungsteil (11) einen Stab (19) aufweist, an dessen Ende ein Steuerkopf (17) vorgesehen ist, der eine Radialkraft auf die Schwenkfläche (20) ausübt während der Verschiebung des Betätigungsteils (11).

## Claims

1. A device for locking a wheel (10) of an automobile vehicle in a housing (2) bounded by a base wall (4) and by a side wall (5) and in which the wheel (10) is locked by means of a support member (8) comprising at least one body (13) which extends axially perpendicular to a support surface (12) of the support member (8) and in which a manoeuvring member (11) provides for the deformation of the body (13) when the support surface (12) is in contact with the wheel (10), in order to cooperate with a retaining member (7) borne by the base wall (4), and in which the deformation of the body (13) takes place by means of a displacement of the manoeuvring member (11) in cooperation with an actuation ramp (20) provided within the body (13).

2. A locking device as claimed in claim 1, characterised in that the body (13) has flexible hooking fingers (14) comprising teeth (15) which cooperate with inner teeth (16) of the retaining member (7).

3. A locking device as claimed in claim 1, characterised in that the manoeuvring member (11) comprises a shank (19) whose end is provided with a control head (17) which imparts a radial thrust to the actuation ramp (20) during the displacement of the manoeuvring member (11).
